(19) Europäisches Patentamt
European Patent Office
Office européen des brevets

(11) Publication number: **0 618 270 A1**

(12) # EUROPEAN PATENT APPLICATION

(21) Application number: **94105193.0**

(51) Int. Cl.$^{5}$: **C08L 81/02**

(22) Date of filing: **31.03.94**

(30) Priority: **02.04.93 JP 76983/93**
**05.04.93 JP 78311/93**

(43) Date of publication of application:
**05.10.94 Bulletin 94/40**

(84) Designated Contracting States:
**DE FR GB**

(71) Applicant: **IDEMITSU PETROCHEMICAL CO. LTD.**
**1-1, Marunouchi 3-chome**
**Chiyoda-ku**
**Tokyo 100 (JP)**

(72) Inventor: **Kosaka, Wataru, c/o Idemitsu Petrochem. Co., Ltd.**
**1-1, Anesakikaigan**
**Ichihara-shi, Chiba-ken (JP)**
Inventor: **Morikawa, Masayuki, c/o Idemitsu Petrochem. Co.Ltd**
**1-1, Anesakikaigan**
**Ichihara-shi, Chiba-ken (JP)**
Inventor: **Osaka, Yasuhiro, c/o Idemitsu Petrochem. Co., Ltd.**
**1-1, Anesakikaigan**
**Ichihara-shi, Chiba-ken (JP)**

(74) Representative: **TER MEER - MÜLLER - STEINMEISTER & PARTNER**
**Mauerkircherstrasse 45**
**D-81679 München (DE)**

(54) **Polyarylene sulfide resin composition, element for protecting and sustaining electric/electronic parts-integrated module, and element for protecting and sustaining SMT-applicable electric/electronic parts.**

(57) The object of the present invention is to provide an element, such as casings, cards, boards or sheets, suitable for mounting, protecting or sustaining electric/electronic parts-integrated modules and SMT-applicable electric/electronic parts, which adequately satisfies the basic properties such as mechanical strength, thermal properties such as resistance to heat by soldering or thermal endurance, precision of shape, high-temperature dimensional stability, insulation, moisture resistance, fire-proofing, etc. and additional properties such as toughness and adhesion to sealing materials.

The element is made from an polyarylene sulfide resin composition which comprises 100 parts by weight of a polyarylene sulfide substantially not cross-linked by thermal oxidation, 1-25 parts by weight of an ethylenic copolymer comprising 50-90 wt% of ethylene, 5-49 wt% of $\alpha$ , $\beta$ -unsaturated alkyl carboxylate and 0.5-10 wt% of maleic anhydride, 0.5-10 parts by weight of an Mg/Al oxide solid solution, and optionally 3 parts by weight or less of di(cyclohexyl)ammonium nitrite and 25-150 parts by weight of a reinforcing filler.

EP 0 618 270 A1

## BACKGROUND OF THE INVENTION

### TECHNICAL FIELD

The present invention relates to a polyarylene sulfide resin composition, an element for protecting and sustaining an electric/electronic parts-integrated module and a member for protecting and sustaining SMT (surface mount technology)-applicable electric/electronic parts. More particularly, the present invention relates to a polyarylene sulfide resin composition suitable for producing molded articles for electric/electronic devices, and molded articles from said polyarylene sulfide resin composition, particularly sealed modules such as power modules, relays such as an SMT-applicable relay and a solid state relay, switches such as an SMT-applicable switch, or not only parts such as casings, bases, cards or connectors, etc., for said modules containing an electric circuit therein but also elements for protecting and sustaining electric/electronic parts-integrated modules and SMT-applicable electric/electronic parts.

### BACKGROUND ART

Demands on a power module used as a power-controlling circuit, particularly a power convertor unit have been rapidly increased for the recent ten years as inverter air conditioners are being popularized. The power module is one of power devices, which may be a so-called "hybrid IC", because it is made to have one or more functions by combining individual semiconductor chips or devices. Generally, a plurality of the power devices including semiconductors or devices such as diodes, thyristors and transistors are connected to take a predetermined structure in a packaged unit.

For packaging of such devices such as power modules, resin sealings have hitherto been widely used by transfer molding thermoplastic resins such as epoxy resins or silicone resins.

However, particularly the power modules may have a package of a considerably large size, although the size varies depending upon the use of the module. In the case where such large size modules are to be sealed with a resin, there are raised various problems. In fact, when the module packages of a size exceeding a certain value, particularly about 4 cm are sealed with a resin such as an epoxy resin, there are raised such problems that cracks are generated due to internal stress or production costs increase.

In the case above, there has been taken a process for making firm packages by providing casings or substrates and then integrating the modules in the casings or bases through a casting resin sealing method.

Modules such as modules accompanied with a general sealing or modules including an electric circuit, for example, a sensor, as well as the power module, have been treated by the same process using the casings or substrates as mentioned above. In recent years, on these casings and substrates there have been provided metal terminals for connecting to external circuits by one-piece molding. Connection between these metal terminals and the circuit terminals owned by the modules is normally made by soldering.

Materials used for the casing and substrates are preferably resins since they are light in weight, insulating and easily moldable. The resins are required to be highly resistant to heat by soldering, or to have a high temperature endurance (life) particularly when used for the power modules through which a large amount of current flows to produce a large amount of heat. Still further, the resins used for the casings and bases are severely required not only to have a high resistance to heat but also a high mechanical strength, high precision of shape, particularly dimensional stability at a high temperature, high resistance to moisture and fire-proofing. As these resins there have hitherto been widely used glass fiber- or inorganic filler-reinforced engineering resins, particularly polyethylene terephthalate (hereinafter often referred to "PET"), polybutylene terephthalate (hereinafter often referred to "PBT"), nylon 66 (hereinafter often referred to "PA-66"), etc.

On the other hand, SMT (abbreviation of Surface Mount Technology) has recently been developed as the most preferred mounting technique for the purpose of densifying and simplifying semiconductor devices and circuits. Use of the SMT to simultaneously incorporate system parts such as connectors, switches, relays, etc. in one package has been gradually generalized. In this case, the parts are directly exposed to a solder melt or its melting temperature, as mentioned above. Resins for these parts such as connectors, switches or relays are required to have an adequately high resistance to heat by soldering.

As the resins used for molding elements of electric/electronic devices, particularly substrates or elements such as casings, bases, cards, boards, sheets or films in such modules as mentioned above or SMT articles, or switches are generally preferred ones satisfying, as much as possible, a mechanical strength, high-temperature heat resistance, precision of shape such as high-temperature dimensional stability, insulation, moisture resistance, fire-proofing, moldability, etc. Particularly, these properties of the

resins have been more and more severely required with improvement in the performance of the various modules and popularization of the SMT articles.

Recently, to respond to the severe requirements, replacement of the conventional PET, PBT and PA-66 with polyphenylene sulfide (hereinafter often referred to "PPS") resins has been tried. The polyphenylene sulfide resins are excellent particularly in high-temperature properties such as heat resistance. However, the PPS resins have good properties such as high-temperature dimensional stability, heat resistance, fire-proofing or moisture resistance, but they are rated to have such serious disadvantages that they generally have a low toughness at least as far as conventional techniques are used, particularly a poor electric adhesion to sealing materials. That is, when the PPS resins are applied to the electric/electronic devices, they arc released from the sealing materials in conventional techniques so that metal parts or circuits involved suffer corrosion or poor electric contact condition. There are such additional problems that metal parts may be cracked when inserted under pressure or screwed down in the post-processing stage. Therefore, the PPS resins are limited in the very narrow range of applications thereof in the conventional techniques.

## DISCLOSURE OF INVENTION

The present invention has been made under the situation as mentioned above.

The object of the present invention is to solve the problems as mentioned above and provide a novel resin composition superior in practical use and adequately satisfying the basic properties, that is, having a high or good mechanical strength, high-temperature heat resistance such as resistance to heat by soldering and high-temperature endurance, precision of shape, particularly dimensional stability, insulation, moisture resistance, fire-proofing and, in addition, having a good toughness and adhesion to sealing materials, when used as elements for various electric/electronic parts, particularly casings, bases or cards of sealed modules, SMT-applicable relays or solid state relays, SMT-applicable switches, or casings or bases of modules containing electric circuits.

Moreover, the other objects of the present invention are to provide an element for protecting or sustaining electric/electronic parts-integrated modules and for SMT-applicable electric/electronic parts, using the resin composition of the present invention having the superior properties as mentioned above.

The present inventors have made intensive studies in order to achieve the objects above and, as a result, they have found that a specific polyarylene sulfide resin composition comprising a polyarylene sulfide (hereinafter often referred to "PAS") substantially free of thermal oxidation cross-linking, such as PPS, a specific ethylenic copolymer and a specific oxide in a specific proportion is adequate to achieve the objects above. The specific polyarylene sulfide composition was applied to the molded elements for the above-mentioned various electric/electronic devices. Rating of these molded elements revealed that they were free from the conventional disadvantages, i.e., low toughness and poor adhesion to sealing materials and adequately satisfied the predetermined basic properties such as mechanical strength, heat resistance, precision of shape such as high-temperature dimensional stability, insulation, moisture resistance, fire-proofing and moldability. Thus, it is seen that the present invention makes it possible to achieve the above-mentioned objects.

Moreover, the present inventors have found that a specific polyarylene sulfide (PAS) containing an amino group and/or amido group incorporated in the molecule thereof to have a branched chain can provide molded elements for electric/electronic parts having a further improved adhesion to sealing materials

The present inventors have completed the present invention based on the findings as mentioned above.

Some preferred embodiments of the present invention will be illustrated below.

The first embodiment of the present invention is a polyarylene sulfide resin composition comprising 100 parts by weight of a polyarylene sulfide substantially not cross-linked by thermal oxidation, 1-25 parts by weight of an ethylenic copolymer, 0.5-10 parts by weight of a Mg/Al oxide solid solution and 0-3 parts by weight of di(cyclohexyl)ammonium nitrite.

The polyarylene sulfide resin composition of this first embodiment contains not more than 150 parts by weight of reinforcing fillers based on 100 parts by weight of a polyarylene sulfide substantially not cross-linked by thermal oxidation.

The polyarylene sulfide in the composition of the first embodiment contains an amino group and/or amido group in the molecule thereof.

The second embodiment of the present invention is an element for protecting or sustaining electric/electronic parts-integrated modules, made from the above-mentioned polyarylene sulfide resin composition.

The third embodiment of the present invention is an element for protecting or supporting SMT-applicable electric/electronic parts.

The fourth embodiment of the present invention is an element for protecting or sustaining electric/electronic parts-integrated modules, made from the polyarylene sulfide resin composition comprising 100 parts by weight of a polyarylene sulfide substantially not cross-linked, 1-25 parts by weight of an ethylenic copolymer comprising 50-90 wt% of ethylene, 5-49 wt% of an $\alpha$ , $\beta$-unsaturated alkyl carboxylate and 0.5-10 wt% of maleic anhydride as monomer units, and 25-150 parts by weight of a reinforcing filler.

The fifth embodiment of the present invention is an element for protesting or sustaining SMT-applicable electric/electronic parts, made from the polyarylene sulfide resin composition comprising 100 parts by weight of a polyarylene sulfide substantially not cross-linked, 1-25 parts by weight of an ethylenic copolymer comprising 50-90 wt% of ethylene, 5-49 wt% of an $\alpha$, $\beta$-unsaturated alkyl carboxylate and 0.5-10 wt% of maleic anhydride as monomer units, and 25-150 parts by weight of a reinforcing filler.

The sixth embodiment of the present invention is an element for protecting or sustaining the above-mentioned electric/electronic parts-integrated modules, made from the above-mentioned polyarylene sulfide resin composition containing a polyarylene sulfide having an amino group and/or amido group in the molecule thereof.

The seventh embodiment of the present invention is an element for protecting or sustaining the above-mentioned SMT-applicable electric/electronic parts, made from the above-mentioned polyarylene sulfide resin composition containing a polyarylene sulfide having an amino group and/or amido group in the molecule thereof.

Of the above-mentioned elements for protecting or sustaining electric/electronic parts-integrated modules, typical examples are casings or bases for sealed modules or casings or bases for modules containing circuits incorporated therein. Of the elements for protecting or sustaining the SMT-applicable electric/electronic parts, typical examples are casings, bases or cards for SMT-applicable relays and SMT-applicable solid state relays, or various molded articles for SMT-applicable switches.

Moreover, of these polyarylene sulfides, a specific one having an amino group and/or amido group in the molecular chain thereof can further improve the properties or performance of the elements for protecting or sustaining electric/electronic parts-integrated modules and SMT-applicable electric/electronic parts.

## BEST MODES FOR CARRYING OUT THE INVENTION

The present invention will be in detail described below.

### -Polyarylene Sulfides-

The polyarylene sulfides used in the present invention are substantially not cross-linked by thermal oxidation.

To the contrary, thermal oxidation cross-linked polyarylene sulfides are normally obtained by preparing a relatively low molecular weight polyarylene sulfide, for example, polyphenylene sulfide, through polymerization and then baking the polyphenylene sulfide in the presence of oxygen at a high temperature below the melting point to promote the oxidation cross-linking, thereby increasing the viscosity thereof. Generally, the thermal oxidation cross-linked polyarylene sulfides have a brown color and high oxygen content in the resin, and are thermally unstable. The thermal oxidation cross-linked polyarylene sulfides have a higher mechanical strength but disadvantageously they have so low toughness that they are brittle. However, since they have a good fluidity when molded, a large amount of them are still used in a thin-walled forming technique and thus are broadly used as an engineering resin. The actual example of the thermal oxidation cross-linked polyarylene sulfide is available under a tradename of PPS-M1900 by Toray Industries, Inc.

On the other hand, the polyarylene sulfide substantially not cross-linked by thermal oxidation, of the present invention are prepared by polymerization in the presence of a polymerizing agent as catalyst and/or branching agent such as trichlorobenzene or dichloronitrobenzene in which the viscosity is adjusted to an objective one. Therefore, the polyarylene sulfides of the present invention are substantially not cross-linked by thermal oxidation. The polyarylene sulfides substantially not cross-linked by thermal oxidation are much thermally stabler than the above-mentioned thermally oxidation cross-linked polyphenylene sulfide, for one of the reasons that they have a very low oxygen content. Advantageously, a very small amount of a corrosive gas such as $SO_2$ is produced and thus practically there occur no problems, as mentioned below. The polyarylene sulfides substantially not cross-linked by thermal oxidation are superior in the toughness than the above-mentioned thermal oxidation cross-linked polyphenylene sulfide and can afford the elements

for protecting or sustaining electric/electronic parts-integrated modules and for protecting or sustaining SMT-applicable electric/electronic parts, which elements have a good impact strength or elongation when post-processed.

As one of the above-mentioned polyarylene sulfides substantially not cross-linked by thermal oxidation reference is made to a polyarylene sulfide having an amino group and/or amido group in the molecular chain thereof. The polyarylene sulfides having the amino group and/or amido group in the molecular chain thereof can be obtained by incorporating the amino group such as $-NH_2$ and/or the amido group such as -NHCOR, wherein R is hydrogen or an alkyl group, through polymerization into the molecular chain, without carrying out any thermal oxidation cross-linking after the polymerization. The "without carrying out any thermal oxidation cross-linking" means that no heat treatment for improving the viscosity is conducted in the present of oxygen at a temperature of at least 150 ° C.

Determination on whether the polyarylene sulfides are cross-linked by thermal oxidation or substantially not is made based on whether or not they were subjected to the heat treatment above. Furthermore, such determination may be made by the following analysis: (a) Determination by the amount of $SO_2$ produced from the polyarylene sulfides:

0.2 g of a polyarylene sulfide as a sample is heated to 300 ° C for one hour in a $N_2$ gas stream at a rate of 100 ml/min. The gas emitted is introduced into an aqueous 1% $H_2O_2$ and then collected. The collected liquid is removed. The gas path is washed with a predetermined amount of an aqueous 1% $H_2O_2$. The resultant washing liquid is added to the collected liquid to form a final collected liquid. The $SO_4^{2-}$ concentration of the final collected liquid is determined by ion chromatography and quantified in terms of the quantity of $SO_2$ gas based on the quantity of the resin. The quantity is in order of ppm ( $\mu$ g/g). According to this determining method, the quantity of $SO_2$ gas produced from the polyarylene sulfides substantially not cross-linked by thermal oxidation is less than 50 ppm, more strictly less than 10 ppm. On the other hand, the quantity of $SO_2$ produced from the thermal oxidation cross-linked polyarylene sulfides exceeds 50 ppm. (b) Determination by the oxygen content of the polyarylene sulfides:

The oxygen content of a polyarylene sulfide as a sample is determined by elementary analysis in terms of the oxygen content based on the quantity of the resin. According to this quantitative analysis, the oxygen content of the polyarylene sulfides substantially not cross-linked by thermal oxidation is normally less than 0.1 wt%, whereas that of the thermal oxidation cross-linked polyarylene sulfides is more than 0.5 wt%.

The polyarylene sulfides of the present invention is defined as being substantially not cross-linked by thermal oxidation. They are slightly cross-linked even if they are heated in the absence of oxygen, thereby substantially raising the viscosity thereof. However, such slightly cross-linked polyarylene sulfides are not defined in the present invention as the thermal oxidation cross-linked polyarylene sulfides. This is easily seen from the analysis by the above-mentioned determining methods, particularly method (a) above.

The use of the polyarylene sulfides substantially not cross-linked by thermal oxidation is essential to the present invention. In other words, the objects of the present invention cannot be achieved by using the thermal oxidation cross-linked polyarylene sulfides in place of the polyarylene sulfides substantially not cross-linked by thermal oxidation.

The "polyarylene sulfides" referred to below means ones substantially not cross-linked by thermal oxidation, if referred to otherwise.

The polyarylene sulfides of the present invention may be produced by various processes, for example, a method as disclosed in Japanese Patent Kokai (Unexamined Publn.) No. 53-25588.

The polyarylene sulfides suitable for use in the present invention and practical processes for producing the polyarylene sulfides will be explained below.

The polyarylene sulfides used in the present invention are composites represented by the general formula I of $-(Ar-S-)_n-$, wherein Ar is a divalent aromatic residue containing at least one of six-membered carbon rings represented by, for example, the formulae I of

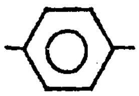 , 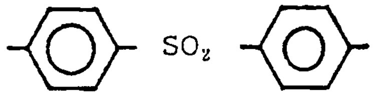 , 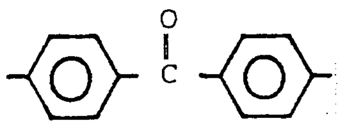 ,

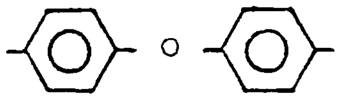 , 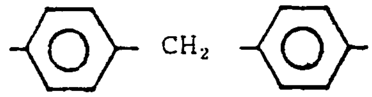 and

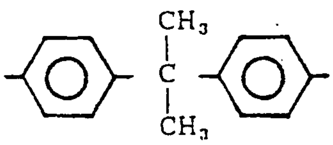 .

Furthermore, various substituents or atoms such as halogen atoms of F, Cl and Br or an alkyl group such as $-CH_3$ may be introduced into each of the aromatic rings.

Particularly, the polyarylene sulfide is typically represented by the formula II of

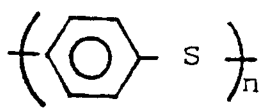

This polyarylene sulfide is commercially available under the trademark "Ryton" produced by Phillips Petroleum Co. The process for producing the polyarylene sulfide is disclosed by U.S. Patent No. 3,354,129 and Japanese Patent Kokoku (Examined Publn.) No. 45-3368. The polyarylene sulfide can be produced by reacting p-dichlorobenzene and sodium sulfide ($Na_2S \cdot H_2O$) in an N-methyl pyrrolidone medium at a temperature of 160-250 ° C under pressure. Moreover, this reaction may be conducted also in the presence of a catalyst such as lithium acetate or lithium chloride to produce a more highly polymerized polyphenylene sulfide, as disclosed in Japanese Patent Kokoku (Examined Publn.) Nos. 52-12240, 53-255888 and 53-255889.

As mentioned above, a branching agent may be added in the polymerization, if desired, to afford a chemically cross-linked structure, thereby adjusting the viscosity. Moreover, as mentioned above, amino group and/ or amido group-containing monomers can be copolymerized to produce polyarylene sulfides containing the amino group and/or amido group at predetermined molecular chains thereof.

Of these various polyarylene sulfides, the polyarylene sulfides containing the amino group and/or amido group therein are preferred.

Of these various polyarylene sulfides, PPS, an amino group-containing PPS, an amido group-containing PPS and an amino group and amido group-containing PPS are particularly preferred.

-Ethylenic Copolymer-

The ethylenic copolymer used in the present invention may comprise the following monomer components: 50-90 wt%, preferably 60-85 wt% of ethylene, 5-49 wt%, preferably 7-45 wt% of $\alpha$, $\beta$-unsaturated alkyl carboxylate and 0.5-10 wt%, preferably 1-8 wt% of maleic anhydride.

If the content of the $\alpha$, $\beta$-unsaturated alkyl carboxylate exceeds 49 wt%, then the thermal stability of the ethylenic copolymer itself is insufficient. If it is less than 5 wt%, then the improvement of the toughness is poor. Moreover, at any rate, the object of the present invention cannot be achieved.

Furthermore, the $\alpha$, $\beta$-unsaturated alkyl carboxylate may be alkyl esters of unsaturated carboxylic acids such as acrylic acid, methacrylic acid, etc., having 3-8 carbon atoms. Examples of the $\alpha$, $\beta$-unsaturatedalkyl carboxylate are methyl acrylate, ethyl acrylate, n-propyl acrylate, isopropyl acrylate, n-butyl acrylate, t-butyl acrylate, methyl methacrylate, ethyl methacrylate, n-propyl methacrylate, isopropyl methacrylate, n-butyl methacrylate, t-butyl methacrylate, etc. Of these examples, ethyl acrylate, n-butyl acrylate and methyl

methacrylate are particularly preferred.

-Mg/Al Oxide Solid Solution-

The Mg/Al oxide solid solution used in the present invention is not limited to a so-called solid solution strictly defined in a physico-chemically narrow sense, and it may be defined in a broad sense to include composite oxides such as alumina-magnesia as defined in a field of catalyst. That is, the Mg/Al oxide solid solution is generally a composite oxide comprising magnesium oxide and aluminum oxide, or composites of various compositions may be used.

Of these, composite oxides represented by the general formula of $Mg_{1-x}Al_xO1_{+X}/2$, wherein X is normally a real number in the range of not more than 0.5, preferably 0.1-0.35 are preferred.

The Mg/Al oxide solid solution is not limited in its shape and may be in a spherical, approximately spherical, irregularly particulate, leaf-like, plate-like, acicular form. Normally, Mg/Al oxide solid solutions having a large BET specific surface area of concretely larger than 50 $m_2/g$ is preferred. The Mg/Al oxide solid solution is extremely small in size and preferably as small as possible.

The Mg/Al oxide solid solution may contain water of crystallization or adsorbed water, or have hydroxyl group on the surface thereof. The acceptable water content of the Mg/Al oxide solid solution is normally 0.3 wt%.

Moreover, the Mg/Al oxide solid solution may containing impurities such as metals, but the content of metals other than Mg and Al is preferably as low as possible. Therefore, the Mg/Al oxide solid solution may be natural if it is highly pure, but normally a synthetic Mg/Al oxide solid solution is preferred.

A preferred example of the Mg/Al oxide solid solution is KW2200 (compositional formula: $Mg_{0.7}Al_{0.3}O_{1.15}$ and BET specific surface area: about 150 $m^2/g$) produced by Kyowa Kagaku Kogyo K.K.

Two or more of the Mg/Al oxide solid solution may be used, if necessary, in the present invention.

It is important that the polyarylene sulfide resin composition according to a preferred embodiment of the present invention comprises at least the polyarylene sulfide, the ethylenic copolymer and Mg/Al oxide solid solution. If desired, other components may be added in such an amount that it does not obstruct achievement of the object of the present invention to the polyarylene sulfide, the ethylenic copolymer and the Mg/Al oxide solid solution.

Moreover, it is also important that the polyarylene sulfide resin composition according to another preferred embodiment of the present invention contains the polyarylene sulfide and the ethylenic copolymer in place of or together with the Mg/Al oxide solid solution.

These other components may be, for example, di(cyclohexyl)ammonium nitrite and reinforcing fillers, as shown below.

-Di(cyclohexyl)ammonium Nitrite-

The di(cyclohexyl)ammonium nitrite is a compound represented by the formula of $(C_6H_{11})_2NH \bullet HNO_2$, for example, commercially available under the tradename of DICHAN, produced by Johoku Kagaku Kogyo K.K. High purity di(cyclohexyl)ammonium nitrite is white and crystalline, and it has a melting point of about 176 ° C and a molecular weight of about 228.

When the di(cyclohexyl)ammonium nitrite is added to the polyarylene sulfide resin composition according to the present invention, it is preferably added in a finely-divided form. However, the added di-(cyclohexyl)ammonium nitrite is not always needed to hold the chemical structure of $(C_6H_{11})_2NH \bullet HNO_2$ in the polyarylene sulfide resin composition, particularly when the composition is molten and kneaded.

Addition of the di(cyclohexyl)ammonium nitrite in a proper amount may often improve the properties of the composition, as mentioned below.

-Reinforcing Fillers-

In accordance with the present invention, various fillers may be used and, for example, they may include glass fibers such as chopped glass fibers and milled glass fibers, carbon fibers such as chopped carbon fibers and milled carbon fibers, whiskers such as potassium titanate whiskers and zinc oxide whiskers, and plate-like inorganic fillers such as mica, talc and glass flakes. One or more of these fillers may be added to satisfy requirements for the properties, shape, size and dimensional precision of the element for protecting or sustaining the electric/electronic parts-integrated modules and the element for protecting or sustaining the SMT-applicable electric/electronic parts. Generally, since it is required to be non-conducting, the glass fibers, whiskers, mica and glass flakes are preferably used.

-Other Optional Components-

In addition to the polyarylene sulfide, ethylenic copolymer, the Mg/Al oxide solid solution, and the di-(cyclohexyl)ammonium nitrite and the reinforcing fillers added if desired, other additional components may be added, if necessary, in such an amount that it does not obstruct achievement of the object of the present invention. For example, such components may include conventional fillers for increasing quantities, other thermoplastic resins and/or thermosetting resins, rubbers, pigments, etc.

-Proportion of Components in Polyarylene Sulfide Resin Composition-

To prepare the polyarylene sulfide resin composition according to a preferred embodiment of the present invention, the proportion of each of the polyarylene sulfide, the ethylenic copolymer and the Mg/Al oxide solid solution is, based on 100 parts by weight of the polyarylene sulfide, 1-25 parts by weight, preferably 3-15 parts by weight for the ethylenic copolymer and 0.5-10 parts by weight, preferably 1-5 parts by weight for the Mg/Al oxide solid solution.

To prepare the polyarylene sulfide resin composition according to another preferred embodiment of the present invention, the proportion of each of the polyarylene sulfide, the ethylenic copolymer and the reinforcing filler is, based on 100 parts by weight of the polyarylene sulfide, 1-25 parts by weight, preferably 3-15 parts by weight for the ethylenic copolymer and 25-150 parts by weight, preferably 40-100 parts by weight for the reinforcing filler.

If the proportion of the ethylenic copolymer is less than 1 part by weight, no toughness is well improved and no adhesion to sealing materials is also well improved. If it exceeds 25 parts by weight, on the other hand, the mechanical strength, heat resistance and fire-proofing are reduced to a large extent and thus the excellent properties of the polyarylene sulfide are highly damaged.

If the proportion of the Mg/Al oxide solid solution is less than 0.5 parts by weight, the effect of lowering the amount of burrs or fins and the amount of gas generated may decrease, and corrosion of metals and releasing from the sealing material may occur. If it exceeds 10 parts by weight, on the other hand, the mechanical strength, particularly impact strength is extremely lowered. In both cases, the object of the present invention is not achieved.

The proportion of the di(cyclohexyl)ammonium nitrite is preferably 3 parts by weight or less, more preferably 1 part by weight or less based on 100 parts by weight of the polyarylene sulfide. It depends upon the use of the resin composition whether the addition of the di(cyclohexyl)ammonium nitrite is favorable.

For example, when the use is the power module casings which are to be sealed, it is preferred that the di(cyclohexyl)ammonium nitrite is not added or added in a very small amount. On the other hand, when the use is the relays, the di(cyclohexyl)ammonium nitrite is preferably added in a very small amount. The added amount of the di(cyclohexyl)ammonium nitrite varies depending upon the use of the polyarylene sulfide resin composition.

Addition of the di(cyclohexyl)ammonium nitrite in a proper amount may improve a property, i.e., prevent the corrosion of metals in the vicinity of the polyarylene sulfide resin composition to a great extent when the resin composition is used at a relatively low temperature for a long period. This improvement of property is favorable for use of the polyarylene sulfide resin composition of the present invention as a molded article for the electric/electronic parts-integrated modules and SMT-applicable electric/electronic parts.

The added amount of the reinforcing fillers used together with the Mg/Al oxide solid solution varies depending upon the use of the resin composition or the kind of the other components added. Normally, the amount is preferably 150 parts by weight or less, more preferably 25-100 parts by weight, based on 100 parts by weight, and it can be expected that this specified amount allows the polyarylene sulfide resin composition to effectively exhibit the heat resistance, particularly at a high temperature and improves the high-temperature dimensional stability and mechanical strength of the molded article of the polyarylene sulfide resin composition.

The amount of the reinforcing filler used in place of the Mg/Al oxide solid solution is as mentioned above.

If the reinforcing filler is used in an amount exceeding 150 parts by weight, the fluidity and workability may be so extremely reduced that it cannot be used.

-Preparation of the Polyarylene Sulfide Resin Composition-

The polyarylene sulfide resin composition of the present invention can be prepared by mixing at least the polyarylene sulfide, the ethylenic copolymer and the Mg/Al oxide solid solution in the proportion as defined above, adding the other components as desired to the mixture, and then, for example, melt-kneading the mixture. The melt-kneading may be conducted by a known way. In any cases, the components should be homogeneously mixed and dispersed in the polyarylene sulfide resin composition. Particularly, the ethylenic copolymer should preferably be dispersed in the resin composition, as adequately as possible.

For this melt-kneading may be normally used a conventional double-screw kneader or a monoscrew kneader.

The melt-kneading conditions are the same as those normally used for the polyarylene sulfide. Particularly to inhibit the decomposition or foaming of the ethylenic copolymer and the di(cyclohexyl)-ammonium nitrite, too high a temperature and too long a retention time should preferably be avoided, or extra suction from a vent should be avoided.

The melt-kneaded polyarylene sulfide resin composition is cut or pelletized in a shape such as pellet and size suitable for secondary processing, particularly injection molding. The resultant particulates or pellets are preferably dried, in which the drying at too high a temperature should desirably be avoided in view of the possibility of the ethylenic copolymer to decompose and foam. The drying temperature is sufficiently in the range of 100-120 ° C and the drying time is preferably in the range of about 3-6 hours.

-Elements for Protecting and Sustaining Electric/Electronic Parts-Integrated Modules and SMT-applicable Electric/Electronic Parts-

The electric/electronic parts-integrated module is an assembly of a plurality of individual semiconductors or modules enclosed with a small size package, which may be sealed with a thermosetting resin such as an epoxy resin or silicone resin. The electric/electronic parts-integrated modules include a power module comprising power devices integrated, i.e., a power-converter unit. A large size power module has an outer casing formed by injection molding and individual elements and modules inserted therein. There may often be used a resin casting method wherein the sealing is conducted with the thermosetting resin. External metal terminals may often be integrated with the outer casing and soldered.

The elements for protecting or sustaining the electric/electronic parts-integrated modules according to the present invention may include molded articles for incorporating the electric/electronic parts-integrated modules therein or mounting the modules thereon, or mounting electric circuits-containing modules thereon. Such molded articles may inculde casings, bases, frames, sheets, films or etc. for mounting modules to be sealed with a thermosetting resin or mounting electric circuit-containing modules. The shape and size of these molded articles vary depending upon the scale and shape of the modules.

The SMT is an abbreviation of surface mount technique and the object thereof is to densify and simplify the integration. The SMT-applicable electric/electronic parts-protecting or sustaining elements are molded articles for high density surface mounting. For example, reference may be made to casings, bases, boards, sheets, films, cards, etc. for high density surface mounted relays, solid state relays, switches, small size portable telephones, VTR with camera, liquid-crystal displays.

The electric/electronic parts-integrated modules-protecting or sustaining elements and the SMT-applicable electric/electronic parts-protecting or sustaining elements according to the present invention satisfy the basic requirements for mechanical strength, heat resistance at a high temperature, resistance to heat by soldering, high-temperature endurance, precision of shape, particularly high-temperature dimensional stability, insulation, moisture resistance, fire-proofing, etc., and in addition toughness and adhesion to sealing materials. Thus, the elements of the present invention are practically useful.

The present invention will be illustrated below with reference to some examples and comparative examples. However, the present invention should not be limited to these examples.

Examples 1-14 and Comparative Examples 1-11

Polyphenylene sulfide resin compositions were prepared by mixing the poly-p-phenylene sulfide, ethylenic copolymer and a reinforcing filler as described in ⟨1⟩ below, in the proportions as shown in Table 1 and melt-kneading the mixture in such a manner as described in ⟨2⟩ below.

Each of the resultant polyphenylene sulfide resin compositions were subjected to rating of moldability and the resultant moldings were evaluated in such a manner as described in ⟨3⟩ below. The results are shown in Table 3.

〈1〉 Starting Materials, Subsidiary Materials and Process for Producing the Same:

(1) Thermal Oxidation Cross-linked Polyarylene Sulfide:

The thermal oxidation cross-linked polyarylene sulfide used in the comparative examples was polyphenylene sulfide produced under M1900 by Toray Industries, Co., (polymer color: brown; and $\eta_{app}$: 3,300 poise at 300° C and a shearing speed of 200 $sec^{-1}$). This polyphenylene sulfide was subjected to the examination in accordance with "(a) Determination by the amount of $SO_2$ produced from the polyarylene sulfides" as described above, which revealed that 120 ppm of $SO_2$ was produced from the thermal oxidation cross-linked polyphenylene sulfide, and then subjected to the examination in accordance with "(b) Determination by the oxygen content of the polyarylene sulfides" as described above, which revealed that the oxygen content of the thermal oxidation cross-linked polyphenylene sulfide was 1.2 wt%. This polyphenylene sulfide is named C-PPS in Table 1.

(2) Polyarylene Sulfide Substantially Not Cross-linked by Thermal Oxidation:

120 kg of $Na_2S\cdot5H_2O$, 110 kg of p-dichlorobenzene and 30 kg of LiCl were heat treated in 340 liters of N-methyl pyrrolidone at 145 ° C for one hour to conduct dehydration, and then the polycondensation was conducted while heating to 260° C for 3 hours. Thereafter, the separated product was washed with acetone. The washed polymer was dried at 120° C for 24 hours. The resultant granule-like polymer was homopoly-p-phenylene sulfide. The yield thereof was 68 kg and 87%. The polymer was white. The $\eta_{app}$ thereof was 540 poise. The amount of $SO_2$ produced from the homopoly-p-phenylene sulfide was determined in accordance with "(a) Determination by the amount of $SO_2$ produced from the polyarylene sulfides" to find that it was 5 ppm and, on the other hand, the oxygen content of the homopolyphenylene sulfide was determined in accordance with "(b) Determination by the oxygen content of the polyarylene sulfides" to find that it was 0.2 wt%. This homopoly-p-phenylene sulfide is named L-PPS in Table 1.

(3) Amino Group-Containing Polyarylene Sulfide:

140 kg of $Na_2S\cdot5H_2O$, 130 kg of dichlorobenzene, 6.8 kg of p-dichloroaniline and 35 kg of LiCl were heat treated in 510 Liters of N-methyl pyrrolidone at 145° C for one hour to conduct dehydration, and then subjected to polycondensation at 260° C for 3 hours. The resultant product was washed with acetone and dried at 120° C for 24 hours. The resultant granule-like polymer had amino groups in the molecule thereof, i.e., it was amino group-branched homopoly-p-phenylene sulfide. The yield thereof was 73 kg and 78%. The polymer was white. The $\eta_{app}$ thereof was 650 poise. The amount of $SO_2$ produced from the homopoly-p-phenylene sulfide was determined in accordance with "(a) Determination by the amount of $SO_2$ produced from the polyarylene sulfides" to find that it was 1 ppm and, on the other hand, the oxygen content of the homopolyphenylene sulfide was determined in accordance with "(b) Determination by the oxygen content of the polyarylene sulfides" to find that it was 0.2 wt%. This homopoly-p-phenylene sulfide is named DCA-PAS in Table 1.

(4) Ethylenic Copolymer:

The ethylenic copolymer used was Bondine-AX8390 produced by Sumitomo Chemical Co., Ltd., which has a MI of 7g/10min as measured in accordance with JIS-K6730. The composition of this copolymer was 68 wt% of ethylene as monomer unit, 30 wt% of ethyl acrylate and 2 wt% of maleic anhydride.

(5) Mg/Al Oxide Solid Solution:

Magnesia-alumina represented by the formula of $Mg_{0.7}Al_{0.3}O_{1.15}$ was used, which was commercially available under tradename of KW2200 produced by Kyowa Kagaku Kogyo K. K. and had a BET specific surface area of 150 $m^2$/g.

(6) Di(cyclohexyl)ammonium Nitrite:

A commercially available product under tradename of DICHAN, produced by Johoku Kagaku Kogyo K.K. and represented by $(H_{11}C_6)_2NH\cdot HNO_2$ was used.

(7) Reinforcing Filler:

The reinforcing filler used was chopped glass fibers, 03JAFT591, produced by Asahi Fiber Glass Co., Ltd. and Szolite Mica 325K1 from Kuraray Co., Ltd.

⟨2⟩ Preparation of Polyarylene Sulfide Resin Composition:

The parts of the components indicated in Table 1 and 2 were dry blended with 100 parts by weight of the polyarylene sulfide, except that the chopped glass fibers alone were side fed by a kneader. The resultant blend was passed at a resin temperature of 320° C through a double-screw extruder (TEM35B) made by Toshiba Machine Co., Ltd. and melt-kneaded. The resultant product was pelletized to finally obtain the compositions as shown in Table 1. The mark ▲ in Tables 1 and 2 means an example outside the scope of claim.

⟨3⟩ Evaluation:

(1) Evaluation of Mechanical Strength, Toughness:

Family molded specimens were prepared at a resin temperature of 320° C and a metal mold temperature of 135 ° C by an injection machine, J50EP, made by The Japan Steel Works, Ltd. Five of the specimens were subjected to tests for breaking strength and breaking extension under ASTM D638 and Izod impact test (unnotched) for impact strength under ASTM D256. The average value of the results of the five specimens are shown in Table 3.

(2) Evaluation of Metal Corrosion at Practically Used Temperature:

A normal metal mold defined by JIS-S55C was abraded with a sand paper of # 800 and a metal mold-polishing compound and an oily material was removed from the surface of the mold by washing with acetone to prepare test pieces for evaluation.

5 g of pellets of the polyarylene sulfide resin composition was placed in a glass Petri dish, and this glass dish was covered with the metal mold on the abraded surface thereof standing upside down. The glass dish was placed in a temperature-controlled bath maintained at 150 ° C for 500 hours, while the surface of the metal mold being exposed to a gas produced from the polyarylene sulfide resin composition.

The exposed metal test piece was placed to stand upside up on the upper stage of a desiccator in which ion exchange water was charged on the lower stage. The desiccator was kept in a bath controlled at 40° C for 100 hours. The test piece was removed, air dried and examined for the degree of corrosion of the metal surface. The degree of corrosion is classified in the following groups:

| Marks of Groups | Degree of Corrosion |
|---|---|
| ◎ | No rust - Very small degree of corrosion |
| O | Small degree of corrosion |
| △ | Corroded on a surface area of 1/2 or less of the entire surface area |
| X | Corroded on a surface area of 1/2 or more of the entire surface area |
| XX | Corroded on the entire surface area |

(3) Evaluation of Initial Adhesion to Sealing Material and Maintenance of the Adhesion:

The polyarylene sulfide resin composition was injection molded by the injection machine as mentioned above to make a box of 30 x 75 x 40mm and 3mm thick. A stock solution of a bisphenol A epoxy sealing agent and a hardening agent kneaded was poured into the box, heated to 130° C and hardened for 2 hours. The resultant product was allowed to cool to room temperature (the first step). After cooling, releasing of the epoxy resin from the outer frame was observed by a microscope. Thereafter, the observed product was further heat treated in an oven heated to 120 ° C, for 10 hours and then allowed to cool (the second step). After cooling, releasing was again observed.

(4) Evaluation of Fluidity and Heat Resistance:

The fluidity was evaluated in terms of a spiral flow length at a resin temperature of 320 ° C and a metal mold temperature of 135 ° C in an injection machine (IS30EPN made by Toshiba Machine Co., Ltd. The heat resistance was evaluated in terms of a distortion temperature under load in accordance with ASTM D648 (HDT, 18.5 kgf).

⟨4⟩ Results and Observations:

The results are shown in Tables 3 and 4. In Tables 3 and 4, mark★ means a particularly noted example.

-Observation of Table 3-

From the results of the examples and comparative examples, it is seen that no reduction of the mechanical strength to a great extent is found when each of the ethylenic copolymer, Mg/Al oxide solid solution and DICHAN is within the range of the added amount defined according to the present invention, and that the toughness in terms of elongation and impact strength is high and the metal corrosion at a low temperature is inhibited to a low level for a long period of time.

If the amount of the Mg/Al oxide solid solution is below the range defined according to the present invention, the adhesion to epoxy resin would be reduced to make initial releasing. The amount of the ethylenic copolymer below the range defined according to the present invention would damage the toughness-improving effect not to compensate the reduction of toughness by addition of the various fillers and additives.

Using DICHAN in the amount below the range defined according to the present invention together with the thermally cross-linked polyphenylene sulfide or with this sulfide and the Mg/Al oxide solid solution may reduce the mechanical strength, toughness and adhesion to epoxy resin.

From Table 3, it is seen that the proportion of DICHAN added is preferably 3 parts by weight or less.

The amounts of the Mg/Al oxide solid solution and the ethylenic copolymer exceeding the ranges defined according to the present invention would reduce the mechanical strength to a great extent.

Moreover, using the thermally cross-linked polyphenylene sulfide as a base reduces the adhesion to epoxy resin and increases the degree of corrosion and, therefore, the effect of improving the toughness by addition of the ethylenic copolymer is cancelled.

-Observation of Table 4-

From the results of the examples, it is seen that only when the added amounts of the ethylenic copolymer arid the reinforcing filler are combined within the ranges defined according to the present invention, there are found no great reduction of the mechanical strength, fluidity and heat resistance, and the toughness in terms of elongation and impact strength and the adhesion to the sealing material are conspicuously improved.

On the other hand, it is seen that when the added amount of the ethylenic copolymer is below the range defined according to the present invention, the adhesion to epoxy resin as sealing material is reduced and the toughness was not improved. Moreover, when the added amount of the reinforcing filler is too small, the breaking strength and the heat resistance are extremely reduced.

It is seen that when the ethylenic copolymer is added in an amount in excess of the range defined according to the present invention, the breaking strength and the heat resistance are reduced, and when the reinforcing filler is added in an amount in excess of the range defined according to the present invention, the fluidity is excessively reduced, and also the reduction of the breaking strength may occur according to the kind of the reinforcing filler.

When the thermal oxidation cross-linked polyarylene sulfide is used, the adhesion to sealing epoxy resin is greatly reduced. When the polyarylene sulfide not cross-linked by thermal oxidation is used, more preferably the polyarylene sulfide not cross-linked by thermal oxidation having a chain branched with an amino group and/or amido group is used, the adhesion to sealing epoxy resin is held at a high level.

Table 1

| | Type of PPS (100 parts by weight) | Ethylenic copolymer | Mg/Al oxide (parts by weight) | DICHAN (parts by weight) | Mica (parts by weight) | Glass fibers (parts by weight) |
|---|---|---|---|---|---|---|
| Example 1 | L-PPS | 1. | 3. | 0.5 | 50 | 60 |
| Example 2 | L-PPS | 7. | 3. | 0.5 | 50 | 60 |
| Example 3 | L-PPS | 25. | 3. | 0.5 | 50 | 60 |
| Example 4 | L-PPS | 7. | 0.5 | 0.5 | 50 | 60 |
| Example 5 | L-PPS | 7. | 10. | 0.5 | 50 | 60 |
| Example 6 | L-PPS | 7. | 3. | 0 | 50 | 60 |
| Example 7 | L-PPS | 7. | 3. | 3 | 50 | 60 |
| Example 8 | DCA-PPS | 7. | 0.5 | 0.5 | 50 | 60 |
| Comp. Ex. 1 | C-PPS▲ | 7. | 3. | 0.5 | 50 | 60 |
| Comp. Ex. 2 | L-PPS | 0.5 ▲ | 3. | 0.5 | 50 | 60 |
| Comp. Ex. 3 | L-PPS | 30.▲ | 3. | 0.5 | 50 | 60 |
| Comp. Ex. 4 | L-PPS | 7. | 0.1▲ | 0.5 | 50 | 60 |
| Comp. Ex. 5 | L-PPS | 7. | 20. ▲ | 0.5 | 50 | 60 |
| Comp. Ex. 6 | L-PPS | 7. | 3. | 5.▲ | 50 | 60 |

Table 2

| | Type of PPS | Ethylenic copolymer (weight) | Mica (weight) | Glass fibers (weight) |
|---|---|---|---|---|
| Example 9 | L-PPS | 1 | 50 | 60 |
| Example 10 | L-PPS | 7 | 50 | 60 |
| Example 11 | L-PPS | 25 | 50 | 60 |
| Example 12 | L-PPS | 7 | 75 | 75 |
| Example 13 | L-PPS | 7 | 10 | 15 |
| Example 14 | DCA-PPS | 1 | 50 | 60 |
| Comp. Ex. 7 | C-PPS ▲ | 7 | 50 | 60 |
| Comp. Ex. 8 | L-PPS | 0▲ | 50 | 60 |
| Comp. Ex. 9 | L-PPS | 30▲ | 50 | 60 |
| Comp. Ex. 10 | L-PPS | 7 | 100 | 100 ▲ |
| Comp. Ex. 11 | L-PPS | 7 | 20▲ | 0 |

TABLE 3

| | Tensile test* | | Izod** value (kgcm/cm²) | Releasing from epoxy resin | | Degree of Corrosion 150° C x 500 hours |
|---|---|---|---|---|---|---|
| | Breaking strength (kgf/cm²) | Elongation (%) | | Initial | After drying | |
| Example 1 | 1320 | 1.5 | 28 | No | Yes | ◎ |
| Example 2 | 1250 | 2.2 | 45 | No | Yes | ◎ |
| Example 3 | 1090 | 3.2 | 66 | No | No | ◎ |
| Example 4 | 1270 | 2.2 | 47 | No | Yes | ○ |
| Example 5 | 1150 | 2.0 | 43 | No | No | ◎ |
| Example 6 | 1350 | 2.4 | 47 | No | No | △ |
| Example 7 | 1010 | 1.9 | 33 | No | Yes | ◎ |
| Example 8 | 1380 | 2.4 | 48 | No | No | ○ |
| Comp. Ex. 1 | 1100 | 1.9 | 35 | Yes★ | Yes | △ ★ |
| Comp. Ex. 2 | 1400 | 1.2★ | 24 ★ | No | Yes | ◎ |
| Comp. Ex. 3 | 980 ★ | 3.7 | 69 | No | No | ◎ |
| Comp. Ex. 4 | 1280 | 2.2 | 47 | Yes★ | Yes | △ ★ |
| Comp. Ex. 5 | 950 ★ | 1.3★ | 25 ★ | No | No | ◎ |
| Comp. Ex. 6 | 840 ★ | 1.3★ | 17 ★ | Yes★ | Yes | ◎ |

*: ASTM D638
**: unnotched

Table 4

| | Tensile test* | | Izod** value ($kgcm/cm^2$) | Releasing from epoxy resin | | Spiral flow length (mm) | HDT (° C) |
|---|---|---|---|---|---|---|---|
| | Breaking strength ($kgf/cm^2$) | Elongation (%) | | Step 1 Y/N | Step 2 Y/N | | |
| Example 9 | 1420 | 1.6 | 30 | No | No | 125 | 272 |
| Example 10 | 1320 | 2.3 | 46 | No | No | 135 | 265 |
| Example 11 | 1150 | 3.4 | 68 | No | No | 155 | 260 |
| Example 12 | 1050 | 1.8 | 35 | No | No | 100 | 270 |
| Example 13 | 1020 | 3.2 | 42 | No | No | 260 | 261 |
| Example 14 | 1520 | 2.0 | 32 | No | No | 120 | 270 |
| Comp.Ex. 7 | 1100 | 1.9 | 35 | Yes★ | Yes★ | 85 ★ | 270 |
| Comp.Ex. 8 | 1450 | 1.1 ★ | 23 ★ | No | Yes★ | 125 | 272 |
| Comp.Ex. 9 | 990★ | 3.7 | 72 | No | No | 160 | 257 ★ |
| Comp.Ex.10 | 1020 | 1.5 | 30 | No | Yes★ | 90 ★ | 272 ★ |
| Comp.Ex.11 | 650★ | 1.0 ★ | 18 ★ | No | No | 350 | 155 ★ |

*: ASTM D638
**: unnotched

ADVANTAGES OF THE INVENTION

The polyarylene sulfide resin composition according to the present invention is practically very useful as a base material of casings or bases for electric/electronic parts, particularly sealed modules such as

power modules, casings, bases or cards for SMT-applicable relays or solid state relays, casings or bases for modules containing electric circuits therein, because the resin composition adequately satisfies the requirements for the basic properties such as mechanical strength, high-temperature properties, particularly resistance to heat by soldering and thermal endurance, precision of shape, particularly high-temperature dimensional stability, insulation, moisture resistance and fire-proofing and additional properties such as toughness and adhesion to sealing materials. Using the polyarylene sulfide resin composition provides high density mounted electric/electronic parts and molded articles for such electric/electronic parts-integrated modules and SMT-applicable molded articles for such electric/electronic parts, which are free of rusting and releasing from sealing materials.

## Claims

**1.** A polyarylene sulfide resin composition which comprises 100 parts by weight of a polyarylene sulfide substantially not cross-linked by thermal oxidation, 1-25 parts by weight of an ethylenic copolymer comprising 50-90 wt% of ethylene, 5-49 wt% of $\alpha$, $\beta$-unsaturated alkyl carboxylate and 0.5-10 wt% of maleic anhydride, 0.5-10 parts by weight of an Mg/Al oxide solid solution and 0-3 parts by weight of di-(cyclohexyl)ammonium nitrite.

**2.** The polyarylene sulfide resin composition according to claim 1, wherein 150 parts by weight of a reinforcing filler is contained based on 100 parts by weight of said polyarylene sulfide.

**3.** The polyarylene sulfide resin composition according to claim 1 or 2, wherein said polyarylene sulfide contains an amino group and/or amido group in the molecule thereof.

**4.** An element for protecting or sustaining electric/electronic parts-integrated modules, which is made from the polyarylene sulfide resin composition according to any one of claims 1-3.

**5.** An element for protecting or sustaining SMT-applicable electric/electronic parts, which is made from the polyarylene sulfide resin composition according to claims 1-3.

**6.** An element for protecting or sustaining electric/electronic parts-integrated modules, which is made from a polyarylene sulfide resin composition comprising 100 parts by weight of a polyarylene sulfide substantially not cross-linked by thermal oxidation, 1-25 parts by weight of an ethylenic copolymer comprising 50-90 wt% of ethylene, 5-49 wt% of $\alpha$, $\beta$-unsaturated alkyl carboxylate and 0.5-10 wt% of maleic anhydride and 25-150 parts by weight of a reinforcing filler.

**7.** An element for protecting or sustaining SMT-applicable electric/electronic parts, which is made from a polyarylene sulfide resin composition comprising 100 parts by weight of a polyarylene sulfide substantially not cross-linked by thermal oxidation, 1-25 parts by weight of an ethylenic copolymer comprising 50-90 wt% of ethylene, 5-49 wt% of $\alpha$, $\beta$-unsaturated alkyl carboxylate and 0.5-10 wt% of maleic anhydride, and 25-150 parts by weight of a reinforcing filler.

**8.** The element for protecting or sustaining electric/electronic parts-integrated modules according to claim 6, wherein said polyarylene sulfide contains an amino group and/or amido group in the molecule thereof.

**9.** The element for protecting or sustaining SMT-applicable electric/electronic parts according to claim 7, wherein said polyarylene sulfide contains an amino group and/or amido group in the molecule thereof.

European Patent Office

# EUROPEAN SEARCH REPORT

Application Number

EP 94105193.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | DERWENT ACCESSION no. 94-072098(09), Questel Telesystems (WPIL) DERWENT PUBLICATIONS LTD., London; & JP-A-06-025 530 (TOSOH CORP.) * Abstract * -- | 1-9 | C 08 L 81/02 |
| X | EP - A - 0 499 468 (TOSOH CORP.) * Page 3, line 7 - page 6, line 28; examples; claims * -- | 1-9 | |
| A | EP - A - 0 368 295 (NIPPON PETROCHEMICALS) * Page 3, line 20 - page 4, line 24; page 7, line 54 - - page 8, line 3; examples; claims * -- | 1-9 | |
| A | EP - A - 0 355 542 (BAYER AG) * Examples; claims * ---- | 1-9 | TECHNICAL FIELDS SEARCHED (Int. Cl.5) C 08 L |

The present search report has been drawn up for all claims

| Place of search | Date of completion of the search | Examiner |
|---|---|---|
| VIENNA | 07-07-1994 | TENGLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)